# DEMANDE DE BREVET EUROPEEN

(11) **EP 1 284 537 A1**
(43) Date de publication de la demande: **19.02.2003**
(21) Numéro de dépôt: 02356155.8
(22) Date de dépôt: 01.08.2002
(51) Int. Cl.: H02G 9/06, H02G 1/08, H02G 3/04, G02B 6/50

(54) **Ensemble d'installation comportant plusieurs conduits et procédé de mise en place d'un tel ensemble**

(30) Priorité: 17.08.2001 FR 0110907
(71) Demandeur: Novoplastic, 01200 Bellegarde sur Valserine (FR)
(72) Inventeur: Second, Christian, 74270 Chene en Semine (FR)
(74) Mandataire: Guerre, Dominique

(57) **Abrégé**

La présente invention concerne un ensemble d'installation rassemblant de manière solidaire une pluralité de conduits d'installation (1,2), disposés parallèlement les uns aux autres selon une direction d'extension longitudinale, chaque conduit d'installation (1,2) comprenant un tube en matière plastique, suffisamment rigide pour résister à toute sollicitation transversale, mais suffisamment souple pour être courbé par rapport à la direction longitudinale.

Selon l'invention, l'ensemble comprend une bande (3) souple allongée selon la direction longitudinale, sur laquelle sont disposés à plat et côte à côte lesdits conduits d'installation (1,2), chaque conduit d'installation (1,2) étant lié à ladite bande le long d'une génératrice (6) du tube en matière plastique, et demeurant pour le reste indépendant du ou des conduits d'installation (1,2) voisins en dehors de la portion transversale de ladite bande le réunissant au(x) dit(s) conduit(s) d'installation voisin(s).

## Description

La présente invention se rapporte au domaine technique général des conduits d'installation utilisés pour le transport d'informations sous forme électrique ou optique ou pour le transport de fluides ou d'énergie.

De tels conduits d'installation sont souvent utilisés pour y loger des câbles électriques, par exemple à l'aide de méthodes de poussage, tirage ou soufflage. Ces méthodes sont connues en tant que telles. Ces conduits d'installation sont par exemple enterrés ou submergés. Un de ces conduits d'installation peut contenir par exemple une pluralité de câbles électriques ou de câbles à fibres optiques. Mais, considérant la croissance de la transmission d'informations de tout genre, il est souvent nécessaire de disposer de plusieurs conduits d'installation reliant les différents points de connexion. Une des idées consiste alors à disposer d'un faisceau de conduits d'installation dont chacun peut comprendre une pluralité de câbles électriques, de câbles de fibres optiques ou autres câbles de télécommunication.

Il est ainsi connu de réaliser un ensemble d'installation rassemblant de manière solidaire une pluralité de conduits d'installation, disposés parallèlement les uns aux autres selon une direction d'extension longitudinale, chaque conduit d'installation comprenant un tube en matière plastique suffisamment rigide pour résister à toute sollicitation transversale, mais suffisamment souple pour être courbée par rapport à la direction longitudinale.

En effet, selon le document GB 1123 331, on réalise un assemblage de tubes de transfert de fluides ou de gaz disposés à plat et parallèlement les uns aux autres. Chacun des tubes est entouré d'une gaine en matériau synthétique, reliée à la gaine voisine par l'intermédiaire d'une fusion le long d'une génératrice longitudinale. Il est ainsi possible de transférer des liquides différents dans chacun des tubes rassemblés côte à côte par l'intermédiaire de leurs gaines extérieures. Les conduits doivent ainsi être enrobés d'une gaine extérieure suffisamment épaisse, d'un matériau différent, pour permettre une fusion locale et une liaison efficace. En outre, le procédé d'assemblage décrit met en oeuvre une double extrusion ainsi qu'une fusion superficielle par soudure. Une telle soudure est réalisée par un bec chauffant par exemple alimenté au gaz, dont le réglage est très délicat pour obtenir une fusion locale lors du défilement des tubes. Ceci rend le procédé de fabrication desdits conduits d'installation plus complexe et coûteux.

On connaît également par l'intermédiaire du document DE-G 8213407.3, un ensemble de tubes reliés entre eux dans un plan médian par l'intermédiaire de languettes transversales. Ces dernières sont réalisées avec le matériau d'extrusion desdits tubes. Un tel assemblage présente l'inconvénient que les tubes et les languettes transversales de liaison doivent être extrudés simultanément. Ceci implique une complexité accrue des machines d'extrusion utilisées. En outre, le nombre de tubes constituant l'assemblage est déterminé par l'extrudeuse même et ne peut par conséquent pas être modifié. Or, il est souvent nécessaire de disposer d'un assemblage comportant un nombre plus ou moins important de conduits d'installation en vue d'utilisations différentes.

Le but de la présente invention vise à disposer d'un ensemble d'installation rassemblant de manière solidaire et souple une pluralité de conduits d'installation et dont la fabrication et en particulier l'assemblage ne nuit pas à la souplesse dudit ensemble.

Un autre but de la présente invention vise à réaliser un ensemble d'installation dont la fabrication permet de modifier facilement le nombre de conduits d'installation dudit ensemble.

Selon l'invention, l'ensemble d'installation comprend une bande souple allongée selon la direction longitudinale, sur laquelle sont disposés à plat et côte à côte, lesdits conduits d'installation, chaque conduit d'installation étant lié à ladite bande le long d'une génératrice du tube en matière plastique, et demeurant pour le reste indépendant du ou des conduits d'installation voisins, en dehors de la portion transversale de ladite bande le réunissant audit conduit d'installation voisin.

Selon l'invention, l'ensemble d'installation permet de mettre en oeuvre un procédé de mise en place d'une pluralité de conduits d'installation à l'intérieur d'un ouvrage du type canalisation, par exemple pour l'évacuation d'eaux usées, dont la section transversale de dimension beaucoup plus importante que celle de chaque conduit d'installation, et comportant une voûte.

Selon un exemple de mise en oeuvre du procédé conforme à l'invention, l'ensemble d'installation est pris entre d'un côté une membrane intérieure rapportée chemisant l'intérieur de l'ouvrage, défléchie radialement vers l'intérieur au niveau de la voûte, et d'un autre côté ladite voûte.

Selon un exemple de réalisation de l'ensemble d'installation conforme à l'invention la bande souple est en matière plastique, et chaque conduit d'installation est lié à ladite bande par co-fusion de leurs matières plastiques respectives, entre la surface extérieure du tube et une surface extérieure de ladite bande.

Selon un exemple de réalisation de l'ensemble d'installation conforme à l'invention, chaque conduit d'installation est lié à la bande par collage avec un adhésif. Ce dernier est par exemple réparti sur une surface extérieure de la bande de manière à constituer une surface autocollante.

Un avantage de l'invention réside dans le fait que l'on peut conserver les machines (extrudeuses) de fabrication des conduits individuels, l'assemblage d'un nombre donné de conduits sur une bande se faisant sur un poste séparé.

D'autres caractéristiques et avantages ressortiront également de la description détaillée, donnée ci-après, en référence au dessin annexé donné à titre d'exemples dans lequel :
- **la figure 1** représente un ensemble d'installation conforme à l'invention selon une section transversale ;
- **la figure 2** représente un autre exemple de réalisation d'un ensemble d'installation conforme à l'invention également selon une section transversale ;
- **la figure 3** représente un exemple d'ouvrage comportant un ensemble d'installation conforme à l'invention selon une section transversale.

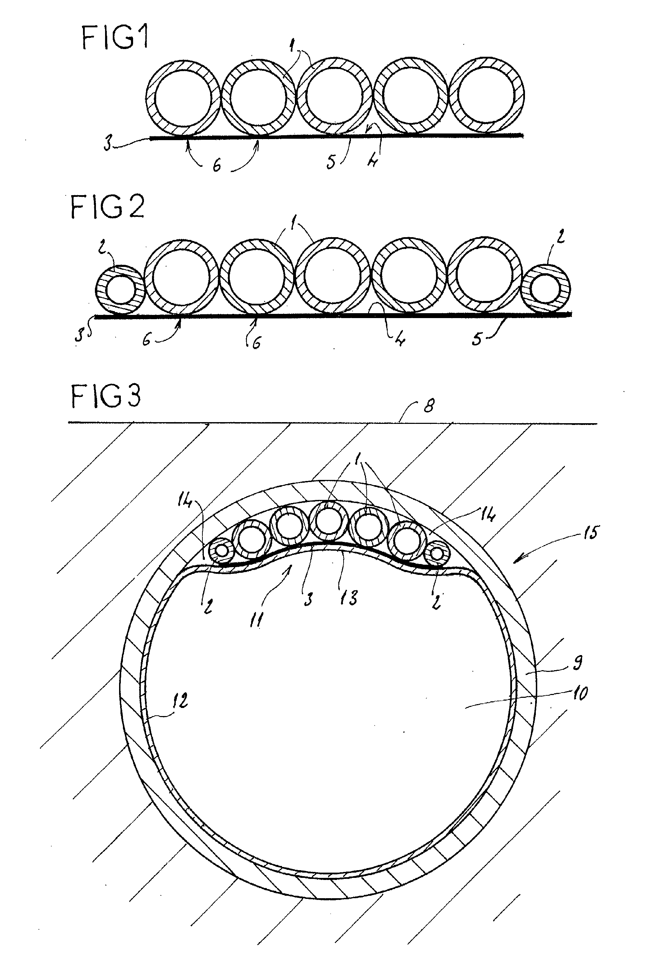

L'ensemble d'installation représenté par exemple à la figure 1, comprend des conduits d'installation 1 disposés côte à côte ou juxtaposés dans un même plan.

L'ensemble d'installation comprend également une bande 3 souple allongée selon la direction longitudinale des conduits d'installation 1. La bande 3 présente une surface extérieure dite supérieure 4 et une surface extérieure dite inférieure 5. Chaque conduit d'installation 1 est lié à la bande 3 le long d'une génératrice 6 du tube en matière plastique constituant ledit conduit d'installation 1 et demeure pour le reste indépendant du ou des conduit(s) d'installation 1 voisin(s), en dehors de la portion transversale de ladite bande 3 le réunissant audit(aux dits) conduit(s) d'installation voisin(s). Cette réunion des conduits d'installation 1, disposés côte à côte, se traduit par une juxtaposition ou un contact simple, sans liaison mécanique ou chimique.

Une éventuelle torsion de la bande souple 3 dans un plan transversal aux directions longitudinales (plan de la figure) peut alors provoquer un écartement plus ou moins important entre les conduits d'installation 1.

Selon un exemple de réalisation, la bande souple 3 est en matière plastique, et chaque conduit d'installation 1 est lié à ladite bande 3 par cofusion de la matière plastique respective entre la surface extérieure du tube et la surface extérieure dite supérieure 4 de la bande 3.

Selon une variante de réalisation de l'ensemble de l'installation conforme à l'invention, chaque conduit d'installation 1 est lié à la bande 3 par soudure avec ou sans apport d'un matériau de soudure.

Selon un autre exemple de réalisation, chaque conduit d'installation 1 est lié à la bande 3 souple par collage à l'aide d'un adhésif. Ce dernier est réalisé par exemple avec une colle du type BOSTICH-SIMSON 007®.

Selon un exemple de réalisation, l'adhésif est réparti sur la bande 3 de manière à constituer une surface autocollante. La bande 3 présente avantageusement une épaisseur comprise entre 2 et 4 mm. L'épaisseur de la bande 3 peut par exemple décroître vers au moins l'une de ces bordures longitudinales (non représenté aux figures). La bande 3 constitue ainsi un film support.

Le matériau constitutif de cette bande 3 souple est par exemple du PEBD linéaire, les conduits d'installation 1 étant réalisés en PEHD. Il est également possible d'utiliser des conduits d'installation 1 présentant une section extérieure décroissante vers au moins l'une des bordures longitudinales dudit ensemble d'installation.

Dans l'exemple de réalisation représenté à la figure 2, l'ensemble d'installation comprend cinq conduits d'installation 1 et deux conduits d'installation extrême 2 disposés aux bordures longitudinales dudit ensemble. Les conduits d'installation 1 extrêmes 2 présentent une section extérieure plus faible que celles des autres conduits d'installation 1.

Ainsi, lorsque la bande 3 souple est disposée à plat, le contour transversal des conduits d'installation 1 et extrêmes 2 disposés côte à côte, présentent un profil en arc de cercle. Ceci présente un certain avantage lorsque l'ensemble d'installation est disposé ou fixé contre une paroi présentant une certaine courbure transversale.

La figure 3 représente un ensemble d'installation conforme à l'invention disposé de façon opérationnelle dans une canalisation 9, par exemple d'évacuation d'eaux usées. Cette canalisation 9 présente une section transversale 10 de dimension beaucoup plus importante que celle de chaque conduit d'installation 1 ou 2. L'ensemble d'installation est disposé sous la voûte 11 de la canalisation 9. L'ensemble d'installation est par exemple suspendu à la voûte 11 avec la bande 3 souple dirigée vers l'intérieur de la canalisation 9 et les conduits d'installation 1, 2 dirigés vers l'extérieur et plus précisément contre la paroi réalisant la voûte 11.

L'ensemble d'installation est pris entre d'un côté une membrane 12 intérieure rapportée chemisant l'intérieur de la canalisation 9. Cette membrane 12 présente une partie défléchie 13 sur laquelle repose la bande 3. La membrane 12 est ainsi défléchie radialement vers l'intérieur au niveau de la voûte 11 pour s'écarter de la paroi de ladite voûte 11, réalisant ainsi un logement pour l'ensemble d'installation.

Avantageusement, la membrane 12 est en matière plastique, par exemple en PEBD linéaire, ainsi que la bande 3 définie précédemment, lesquelles sont intégrées l'une à l'autre par fusion lors de la mise en place de ladite membrane 12 dans la canalisation 9.

Des interstices 14 subsistent en général entre les conduits d'installation 1, 2 et entre la voûte 11 et la partie défléchie 13 de la membrane 12. Ces interstices 14 sont avantageusement remplis par un matériau de rigidification et/ou de fixation du type béton. Il est évident qu'une fois installée, la membrane 12 constitue une structure rigide.

La figure 3 représente un ouvrage 15 d'acheminement de fluides du type canalisation 9, par exemple d'évacuation d'eaux usées comportant la membrane 12 de chemisage intérieur et un ensemble d'installation conforme à l'invention, lequel est disposé entre la voûte 11 et la partie défléchie 13 au niveau de la voûte 11 de la membrane 12

La présente invention concerne également la mise en place d'une pluralité de conduits d'installation 1 à l'intérieur d'un ouvrage 15 du type canalisation 9. Un tel procédé met ainsi en oeuvre un ensemble d'installation conforme à l'invention.

Selon ce procédé, on dispose l'ensemble d'installation dans la canalisation 9. Ensuite, un dispositif de chemisage du type robot automatique piloté à distance, se déplace dans la canalisation 9 pour positionner l'ensemble d'installation contre la voûte 11 avec la bande 3 dirigée vers l'intérieur de la canalisation 9. La membrane 12 de chemisage, réalisée avec un matériau thermodurcissable est « soufflée » et déformée sur la paroi intérieure de la canalisation 9 avec de l'eau chaude. Le plaquage de la membrane 12 sur l'ensemble d'installation disposé en voûte 11 génère donc la partie défléchie 13.

L'utilisation de l'eau chaude permet alors quasi simultanément de porter la membrane 12 à une température d'environ 80°C, correspondant à la température de polymérisation du matériau constitutif de ladite membrane 12. Cette dernière intègre alors par fusion la bande 3.

La bande 3 présente l'avantage de constituer un écran thermique pour les conduits 1, 2 de l'ensemble d'installation, vis à vis de la membrane 12 chauffée.

Un autre avantage de l'ensemble d'installation conforme à l'invention réside dans le fait que les conduits 1, 2 ne sont pas intégrés dans la membrane 12 par fusion. Un désassemblage peut alors s'opérer facilement sans blesser ou déformer la matière constitutive des conduits 1, 2.

Les formes, les sections, et les dimensions des conduites 1, 2 élémentaires ne sont alors pas altérées lors de l'opération de chemisage. Les extrémités des conduits 1, 2 peuvent ainsi être facilement décollées ou séparées de la membrane 12, et des connexions, via des raccords, sur d'autres conduits 1, 2 en ligne ou en dérivation peuvent être réalisées. Malgré l'intégration de l'ensemble d'installation dans la membrane 12 de chemisage, les possibilités de raccordement ultérieures ne sont pas affectées.

## Revendications

1. Ensemble d'installation rassemblant de manière solidaire une pluralité de conduits d'installation (1,2), disposés parallèlement les uns aux autres selon une direction d'extension longitudinale, chaque conduit d'installation (1,2) comprenant un tube en matière plastique, suffisamment rigide pour résister à toute sollicitation transversale, mais suffisamment souple pour être courbé par rapport à la direction longitudinale, **caractérisé en ce que** ledit ensemble comprend une bande (3) souple allongée selon la direction longitudinale, sur laquelle sont disposés à plat et côte à côte lesdits conduits d'installation (1,2), chaque conduit d'installation (1,2) étant lié à ladite bande le long d'une génératrice (6) du tube en matière plastique, et demeurant pour le reste indépendant du ou des conduits d'installation (1,2) voisins en dehors de la portion transversale de ladite bande le réunissant au(x) dit(s) conduit(s) d'installation voisin(s).

2. Ensemble selon la revendication 1, **caractérisé en ce que** la bande (3) souple est en matière plastique, et chaque conduit (1,2) d'installation est lié à ladite bande par co-fusion de leurs matières plastiques respectives, entre la surface extérieure du tube et une surface extérieure de ladite bande (3).

3. Ensemble selon la revendication 1, **caractérisé en ce que** chaque conduit d'installation (1,2) est lié à ladite bande (3) par soudure, avec ou sans apport d'un matériau de soudure.

4. Ensemble selon la revendication 1, **caractérisé en ce que** chaque conduit d'installation (1,2) est lié à ladite bande (3), par collage avec un adhésif.

5. Ensemble selon la revendication 4, **caractérisé en ce que** l'adhésif est réparti sur une surface extérieure de la bande (3) de manière à constituer une surface (4) autocollante.

6. Ensemble selon la revendication 1, **caractérisé en ce que** l'épaisseur de la bande (3) décroît vers au moins une de ses bordures longitudinales.

7. Ensemble selon la revendication 1, **caractérisé en ce que** la section extérieure des conduits (1,2) disposés côte à côte décroît vers au moins une de ses bordures longitudinales.

8. Ensemble selon la revendication 1, **caractérisé en ce que** la bande (3) souple étant disposée à plat, le contour transversal des conduits disposés côte à côte, a un profil en arc de cercle.

9. Procédé de mise en place d'une pluralité de conduits d'installation (1,2) à l'intérieur d'un ouvrage (15) du type canalisation (9), par exemple pour l'évacuation d'eaux usées, dont la section transversale (10) de dimensions beaucoup plus importantes que celles de chaque dit conduit d'installation (1,2) comporte une voûte (11), ledit procédé mettant en oeuvre un ensemble d'installation selon l'une quelconque des revendications 1 à 8.

10. Procédé selon la revendication 9, **caractérisé en ce que** l'ensemble d'installation est suspendu à la voûte (11), avec la bande (3) souple dirigée vers l'intérieur de l'ouvrage (15), et les conduits d'installation (1,2) dirigés vers l'extérieur, contre la paroi réalisant la voûte (11) de l'ouvrage (15).

11. Procédé selon la revendication 9 ou 10, **caractérisé en ce que** l'ensemble d'installation est pris entre, d'un côté une membrane (12) intérieure, rapportée, chemisant l'intérieur de l'ouvrage (15), défléchie radialement vers l'intérieur au niveau de la voûte (11), pour s'écarter de la paroi de la voûte (11), et d'un autre côté ladite voûte (11).

12. Procédé selon la revendication 11, **caractérisé en ce que** la membrane (12) est en matière plastique, ainsi que la bande (3) souple de l'ensemble d'installation, lesquelles sont intégrées l'une à l'autre par fusion lors de la mise en place de ladite membrane (12) dans l'ouvrage (15).

13. Procédé selon la revendication 11 ou 12, **caractérisé en ce que** des interstices (14) entre les conduits d'installation (1,2) et entre la voûte (11) et une partie défléchie (13) de la membrane (12) sont remplis par un matériau, du type béton.

14. Ouvrage (15) d'acheminement de fluide, du type canalisation d'évacuation d'eaux usées, comportant une membrane (12) intérieure de chemisage et un ensemble d'installation conforme à l'une quelconque des revendications 1 à 8, disposé entre la voûte (11) dudit ouvrage (15) et une partie défléchie (13) au niveau de la voûte (11) de ladite membrane (12).
